# EUROPÄISCHE PATENTSCHRIFT

(11) **EP 2 018 531 B1**
(45) Veröffentlichungstag und Bekanntmachung des Hinweises auf die Patenterteilung: **21.11.2012**
(21) Anmeldenummer: 07724816.9
(22) Anmeldetag: 03.05.2007
(51) Int. Cl.: G01L 3/10

(54) **VORRICHTUNG ZUM BESTIMMEN EINES AUF EINE WELLE AUSGEÜBTEN DREHMOMENTS**
APPARATUS FOR DETERMINING A TORQUE EXERTED ON A SHAFT
DISPOSITIF POUR DÉTERMINER UN COUPLE EXERCÉ SUR UN ARBRE

(30) Priorität: 16.05.2006 DE 102006023883
(43) Veröffentlichungstag der Anmeldung: 28.01.2009
(73) Patentinhaber: Valeo Schalter und Sensoren GmbH, 74321 Bietigheim-Bissingen (DE)
(72) Erfinder: RACHUI, Dirk, 74321 Bietigheim-Bissingen (DE); FRÖHLICH, Ekkehard, 74226 Nordheim (DE); THORN, Jens, 71034 Böblingen (DE); JEREMS, Frank, 74369 Löchgau (DE)
(86) Internationale Anmeldenummer: PCT/EP2007/003890
(87) Internationale Veröffentlichungsnummer: WO 2007/131637

(56) Entgegenhaltungen:
- DE-A1- 3 826 141
- DE-A1- 19 609 981
- DE-A1- 19 828 513
- DE-A1-102005 018 293
- US-A- 5 450 761

## Beschreibung

Die Erfindung betrifft eine Vorrichtung zum Bestimmen eines auf eine Welle ausgeübten Drehmoments, wobei die Welle einen ersten Wellenabschnitt aufweist, auf dem ein drehfest angeordneter multipolarer Magnetring vorgesehen ist und einen mit dem ersten Wellenabschnitt drehelastisch verbundenen zweiten Wellenabschnitt aufweist, auf dem ein drehfest angeordneter Magnetfeldsensor vorgesehen ist, wobei der bei einem auf die Welle wirkenden Drehmoment auftretende Verdrehwinkel des Magnetrings mit dem Magnetfeldsensor erfasst wird und aus dem Verdrehwinkel das auf die Welle wirkende Drehmoment bestimmbar ist.

Derartige Vorrichtungen können insbesondere an Lenkwellen von Kraftfahrzeugen vorgesehen sein, um das auf die Lenkwelle wirkende Drehmoment zu bestimmen.

Gattungsgemäße Vorrichtungen sind beispielsweise aus der DE 198 28 513 A1 vorbekannt. Als problematisch hat sich hierbei die Anordnung des Magnetrings am zugehörigen Wellenabschnitt herausgestellt.

Aus den Dokumenten DE 198 28 513 A1, US 5 450 761 A, DE 196 09 981 A1 und DE 38 26 141 A1 sind jeweils für sich genommen Messvorrichtungen zur Bestimmung eines Drehmoments bekannt, bei denen ein Magnetring mittels Klebung an einer Welle befestigt ist.

Der vorliegenden Erfindung liegt deshalb die Aufgabe zugrunde, eine eingangs genannte Vorrichtung derart weiterzubilden, dass eine geeignete und dauerhaft funktionssichere Anordnung des Magnetrings am zugehörigen Wellenabschnitt gewährleistet wird.

Diese Aufgabe wird erfindungsgemäß dadurch gelöst, dass der Magnetring mit einem wenigstens abschnittsweise zwischen dem ersten Wellenabschnitt und dem Magnetring vorgesehenen Klebstoff am ersten Wellenabschnitt angeordnet ist oder dass der Magnetring mit einem wenigstens abschnittsweise zwischen einer auf dem ersten Wellenabschnitt drehfest angeordneten Hülse und dem Magnetring vorgesehenen Klebstoff an der Hülse angeordnet ist. Der Magnetring kann folglich entweder direkt mit dem Klebstoff an dem zugehörigen Wellenabschnitt angeordnet sein oder auf einer Hülse, welche dann mit geeigneten Mitteln am zugehörigen Wellenabschnitt zu befestigen ist. Die Verwendung von Klebstoff im Radialspalt zwischen dem ersten Wellenabschnitt beziehungsweise der Hülse und dem Magnetring hat den Vorteil, dass ein wenigstens weitgehendes kraft- und spannungsfreies Anordnen des Magnetrings am ersten Wellenabschnitt beziehungsweise an der Hülse stattfinden kann. Insbesondere dann, wenn der Magnetring, um besonders gute hartmagnetische Eigenschaften aufzuweisen, einen hohen Anteil an Magnetpartikeln aufweist, ist dieser vergleichsweise spröde. Wirken auf einen derart spröden Magnetring äußere Kräfte, so kann dies zu einer Beschädigung des Magnetrings, und damit zu einem ungenauen Messergebnis des Drehmoments führen. Die Erfindung hat folglich den Vorteil, dass auch ein Magnetring mit einem hohen Füllgrad dauerhaft funktionssicher am Wellenabschnitt beziehungsweise an einer auf dem Wellenabschnitt vorzusehenden Hülse angeordnet werden kann.

Das vorsehen einer Hülse hat den Vorteil, dass die Hülse samt darauf angeordnetem Magnetring als entsprechende Baugruppe unabhängig von der späteren Ausführungsform der Lenkwelle vormontiert werden kann. Die Hülse, die insbesondere aus Edelstahl sein kann, kann folglich eine Adapterfunktion zwischen der Lenkwelle und dem Ringmagneten erfüllen.

Gemäß der Erfindung ist vorgesehen, dass der erste Wellenabschnitt, beziehungsweise die Hülse, auf der dem Magnetring zugewandten Seite wenigstens abschnittsweise eine Struktur zur formschlüssigen Verzahnung des Klebstoffs mit dem ersten Wellenabschnitt, beziehungsweise der Hülse, in axialer und/oder umlaufender Richtung aufweist. Das Vorsehen einer solchen Struktur hat den Vorteil, dass selbst dann, wenn ein Haften des Klebstoffs am Wellenabschnitt, beziehungsweise an der Hülse, nachlassen sollte, aufgrund der formschlüssigen Verzahnung eine mechanische Kopplung zwischen dem ersten Wellenabschnitt beziehungsweise der Hülse und dem Klebstoff gegeben ist. Je nach Art der Struktur kann die Kopplung als Drehkopplung und/oder als Kopplung in axialer Richtung ausgebildet sein.

Alternativ weist der Magnetring auf seiner Innenseite wenigstens abschnittsweise eine Struktur zur formschlüssigen Verzahnung des Klebstoffs mit dem Magnetring in axialer und/oder umlaufender Richtung auf. Auch hierdurch kann gewährleistet werden, dass bei einem Nachlassen der adhäsiven Wirkung des Klebstoffs dennoch ein mechanischer Formschluss aufgrund der Verzahnung in axialer und/oder umlaufender Richtung, je nach Ausbildung der Struktur, gegeben ist.

Die Struktur, die einerseits an der Welle beziehungsweise der Hülse und/oder andererseits am Magnetring vorgesehen sein kann, kann insbesondere rändelartig ausgebildet sein, eine oder mehrere wenigstens abschnittsweise umlaufende Nuten und/oder Stege aufweisen, Bohrungen, Sacklöcher und/oder eine oder mehrere Schlüsselflächen vorsehen. Derartige Strukturen gewährleisten, dass eine ausreichende Verzahnung zwischen der Welle und dem ausgehärteten Klebstoff beziehungsweise dem ausgehärteten Klebstoff und dem Magnetring gewährleistet wird.

Zur Erreichung einer koaxialen Anordnung des Magnetrings auf dem ersten Wellenabschnitt kann insbesondere die magnetringseitige Struktur zur Mittellängsachse des Magnetrings gewandte Zentrierabschnitte vorsehen. Die Zentrierabschnitte sind dabei vorteilhafterweise so gewählt, dass der Magnetring wenigstens weitgehend, auch ohne Vorsehen von Klebstoff, koaxial zum ersten Wellenabschnitt angeordnet ist.

Dies kann beispielsweise dadurch erfolgen, dass der Durchmesser eines an den freien, nach radial innen gewandten Enden der Zentrierabschnitte anliegenden, gedachten Zylinders gleich oder nur geringfügig größer ist als der Außendurchmesser des Wellenabschnitts beziehungsweise der Hülse beziehungsweise der am Wellenabschnitt beziehungsweise der Hülse vorgesehenen Struktur. Gemäß einer derartigen Ausgestaltung nimmt der Magnetring folglich beim Aufschieben auf den ersten Wellenabschnitt beziehungsweise auf die Hülse eine vorgesehene koaxiale Lage ein.

Die Zentrierabschnitte können dabei vorteilhafterweise in Aufschieberichtung des Magnetabschnitts auf den ersten Wellenabschnitt beziehungsweise auf die Hülse verlaufend angeordnet sein. Derartige Zentrierabschnitte verlaufen im Wesentlichen parallel zur Mittellängsachse des Magnetrings. Hierdurch wird gewährleistet, dass ein achsschiefes Anordnen des Magnetrings auf dem ersten Wellenabschnitt weitestgehend vermieden wird.

Die Zentrierabschnitte 40 können auch schräg beziehungsweise gekippt zur Mittellängsachse verlaufen, beispielsweise wechselseitig gekippt. Auch hierdurch wird eine axiale Sicherung erreicht. Die Zentrierabschnitte 40 können dabei nur über einen Teil der axialen Länge der Innenseite des Magnetrings 14 ausgebildet sein.

Gemäß einer weiteren vorteilhaften Ausgestaltung der Erfindung ist denkbar, dass die Welle in axialer Richtung neben dem Magnetring eine Schulter aufweist, an der der Magnetring wenigstens abschnittsweise anliegt. Hierdurch kann erreicht werden, dass ein axiales Ausweichen des Magnetrings in die Richtung, an der der Magnetring an der Schulter anliegt, selbst bei sich lösendem Klebstoff unterbunden wird. Die Schulter kann dabei insbesondere als umlaufender Ringbund ausgebildet sein.

Weitere Einzelheiten und vorteilhafte Ausgestaltungen der Erfindung sind der nachfolgenden Beschreibung zu entnehmen, anhand derer das in den Figuren dargestellte Ausführungsbeispiel der Erfindung näher beschrieben und erläutert ist.

Es zeigen:
- Figur 1: eine Seitenansicht einer ersten erfindungsgemäßen Vorrichtung;
- Figur 2: eine perspektivische Ansicht der Figur 1 mit Teilschnitt durch den Magnetring;
- Figur 3: eine Seitenansicht einer zweiten erfindungsgemäßen Vorrichtung;
- Figur 4: eine perspektivische Ansicht der Figur 3 mit einem Teilschnitt durch den Magnetring;
- Figuren 5 bis 7: verschiedene Ansichten und Schnitte eines Magnetrings für eine Vorrichtung gemäß Figur 1 oder 3.

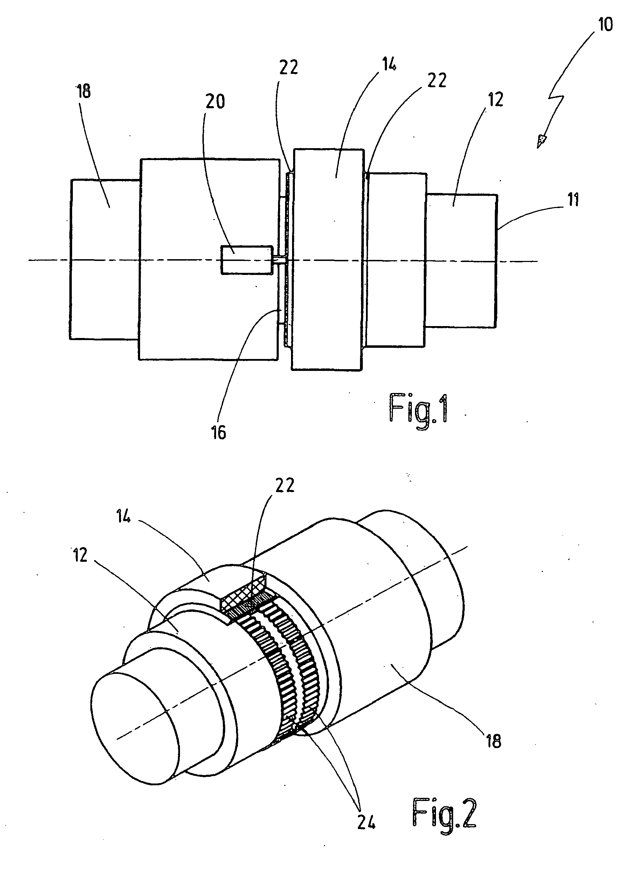

In den Figuren 1 und 2 ist eine Drehmomentmessvorrichtung 10 zum Bestimmen eines auf eine Welle 11 ausgeübten Drehmoments dargestellt, die einen ersten Wellenabschnitt 12 aufweist, auf dem ein multipolarer Magnetring 14 angeordnet ist. Der erste Wellenabschnitt 12 ist über einen drehelastischen Verbindungsabschnitt 16, beispielsweise über einen Torsionsstab, mit einem zweiten Wellenabschnitt 18 drehverbunden. Auf dem zweiten Wellenabschnitt 18 ist ein in der Figur 1 schematisch angedeuteter Magnetfeldsensor 20 drehfest angeordnet. Mit dem Magnetfeldsensor 20 und dem Magnetring 14 kann bei einem auf die Welle 11 wirkenden Drehmoment der aufgrund des drehelastischen Wellenabschnitts 18 sich ergebende Verdrehwinkel zwischen dem ersten Wellenabschnitt 12 und dem zweiten Wellenabschnitt 18 bestimmt werden. Der Verdrehwinkel ist dabei abhängig von der Größe des Drehmoments. Über den Verdrehwinkel kann folglich das auf die Welle 11 wirkende Drehmoment bestimmt werden.

Wie aus der Figur 2 deutlich wird, ist der Magnetring 14 um den ersten Wellenabschnitt 12 herum angeordnet, wobei in dem Bereich beziehungsweise in dem Radialspalt zwischen dem Magnetring 14 und dem Wellenabschnitt 12 ein Klebstoff 22 vorgesehen ist. Aufgrund der Adhäsivität des Klebstoffs ist der Magnetring 14 drehfest mit dem Wellenabschnitt 12 verbunden, ohne dass aufgrund der Verbindung äußere Kräfte auf den Magnetring 14 wirken.

Der erste Wellenabschnitt 12 weist dabei in dem dem Magnetring 14 zugewandten Bereich eine Struktur in Form von zwei parallel zueinander, um den Wellenabschnitt 12 herum verlaufenden, voneinander beabstandeten Längsriffelungen 24 auf. Andere erhabene oder vertiefte Strukturen sind ebenfalls möglich. Aufgrund des Vorsehens einer derartigen Struktur wird eine formschlüssige Verzahnung zwischen dem ersten Wellenabschnitt 12 und dem ausgehärteten Klebstoff 22 erreicht. Sollte wider Erwarten die Adhäsivität zwischen Klebstoff 22 und Wellenabschnitt 12 nachlassen, so wird aufgrund der Struktur beziehungsweise den Riffelungen 24 dennoch eine drehfeste und schiebefeste Verbindung zwischen dem Klebstoff 22 und dem Wellenabschnitt 12 gewährleistet.

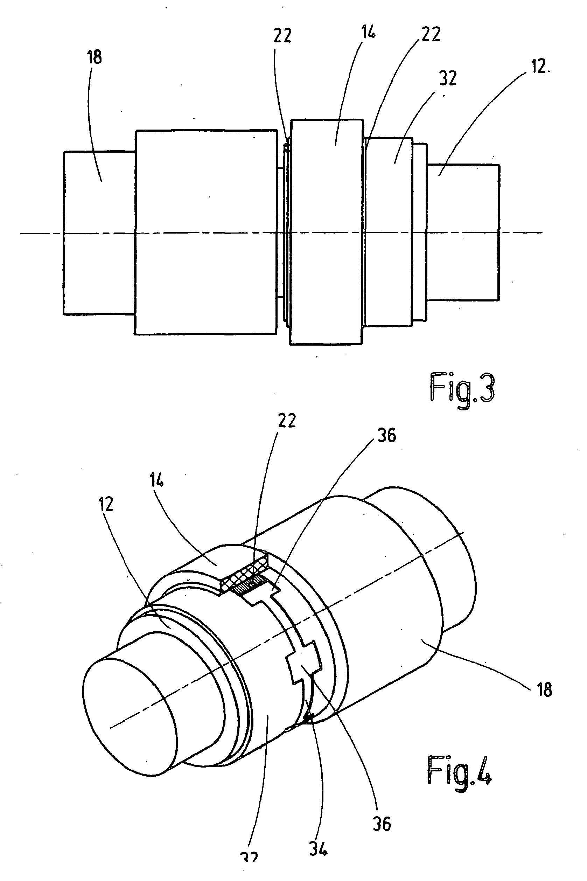

Die in den Figuren 3 und 4 gezeigte Drehmomentmessvorrichtung 30 entspricht im Wesentlichen der Drehmomentmessvorrichtung 10 gemäß den Figuren 1 und 2, wobei entsprechende Bauteile mit entsprechenden Bezugszeichen versehen sind.

Die Drehmomentmessvorrichtung 30 sieht allerdings auf dem ersten Wellenabschnitt 12 eine Hülse 32 vor, auf welcher der Magnetring 14 angeordnet ist. Das Vorsehen einer derartigen Hülse 32, die in axialer Richtung auf den Wellenabschnitt 12 aufschiebbar ausgebildet sein kann, hat den Vorteil, dass der Magnetring 14 samt Hülse als Vormontagegruppe vormontiert werden kann. Da der Magnetring 14 vorteilhafterweise einen hohen hartmagnetischen Anteil aufweist, ist dieser vergleichsweise spröde und beschädigungsanfällig.

Wie aus Figur 4 deutlich wird, ist zwischen der Hülse 32 und dem Magnetring 14 eine Klebstoffschicht vorgesehen, aufgrund derer der Magnetring 14 an der Hülse 32 drehfest befestigt ist.

Der dem Magnetring 14 zugewandte, und in der Endmontageposition vom Magnetring verdeckte Abschnitt der Hülse 32 weist zur formschlüssigen Verzahnung des Klebstoffs mit der Hülse 32 eine Struktur in Form von einer umlaufenden Nut 34 auf, in die mehrere rechteckig ausgebildete Ausnehmungen 36 eingelassen sind, welche in axialer Richtung breiter als die Nut 34 sind. Die von der Nut 34 und den Ausnehmungen 36 gebildete Schlüsselstruktur ist im endmontierten Zustand vollständig mit Klebstoff gefüllt. Selbst dann, wenn die Klebehaftung des Klebstoffs 22 an der Hülse 32 nachlassen sollte, wird aufgrund der durch die Struktur erreichten formschlüssigen Verzahnung des Klebstoffs 22 mit der Hülse 32 eine Bewegung des Klebstoffs gegenüber der Hülse 32 in axialer und umlaufender Richtung unterbunden. Auch hier können in der Hülse andere erhabene oder vertiefte Strukturen angebracht sein.

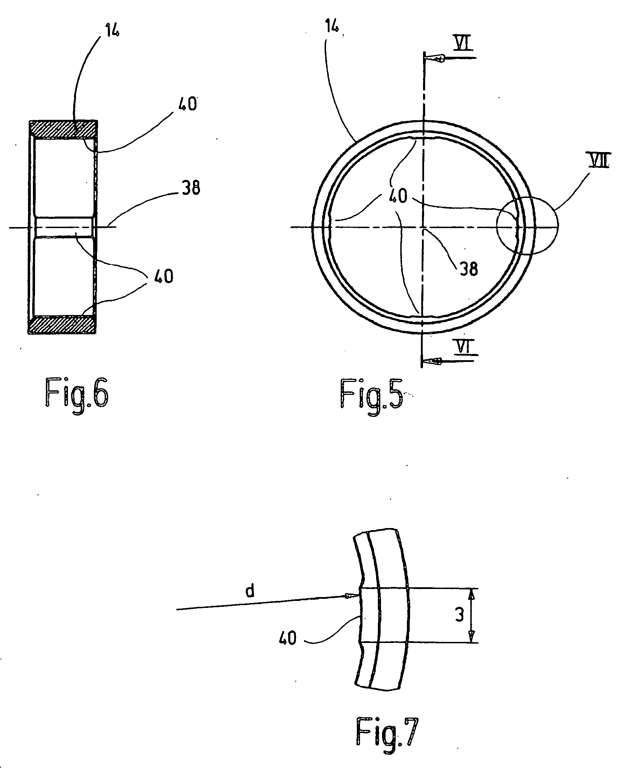

Der in den Figuren 5 bis 7 dargestellte Magnetring 14 weist auf seiner radial innen liegenden Seite eine Struktur in Form von zur Mittellängsachse 38 gerichteten Zentrierabschnitten 40 auf, die parallel zur Mittellängsachse 38 verlaufen. Insgesamt sind vier derartige, äquidistant zueinander angeordnete Zentrierabschnitte 40 vorgesehen. Eine andere Anzahl Zentrierabschnitte ist auch möglich. Die Zentrierabschnitte 40 gewährleisten ein koaxiales Anordnen des Magnetrings 14 auf dem Wellenabschnitt 12 beziehungsweise auf der Hülse 32. Dazu ist der Abstand d von der Mittellängsachse 38 zur Oberfläche der Zentrierabschnitte 40 gleich oder nur geringfügig größer als der Umfangsradius des mit der Struktur versehenen Wellenabschnitts 12 beziehungsweise der mit der Struktur versehenen Hülse 32. Dadurch wird gewährleistet, dass ein Aufschieben des Magnetrings 14 auf den Wellenabschnitt 12 beziehungsweise auf die Hülse 32 noch möglich ist, wobei dann die Zentrierabschnitte 40 so am Wellenabschnitt 12 beziehungsweise der Hülse 32 zum Aufliegen kommen, dass der Magnetring 14 koaxial zum Wellenabschnitt 12 beziehungsweise zur Hülse 32 angeordnet ist. Aufgrund der nach radial innen ragenden Zentrierabschnitte 40 ist im Bereich zwischen zwei jeweils benachbarten Zentrierabschnitten 40 ausreichend Raum für den Klebstoff 22. Durch die Zentrierabschnitte wird zudem erreicht, dass beim Nachlassen der Adhäsionswirkung zwischen Klebstoff 22 und Magnetring 14 aufgrund der mechanischen Verzahnung zwischen Klebstoff und Magnetring ein ungewolltes Verdrehen des Magnetrings 14 gegenüber dem Wellenabschnitt 12 beziehungsweise der Hülse 32 unterbunden wird. Um zusätzlich noch eine Verzahnung in axialer Richtung zu erreichen, ist denkbar, dass auf der Innenseite des Magnetrings 14 in umlaufender Richtung eine Erhebungen und/oder Vertiefungen vorsehende Struktur angeordnet sein kann. Beispielsweise kann eine umlaufende Ringnut vorgesehen werden, mit welcher eine ausreichende Verzahnung in axialer Richtung erreicht werden kann.

Zur Sicherung des Magnetrings 14 in axialer Richtung kann zudem vorgesehen sein, dass am Wellenabschnitt 12 beziehungsweise an der Hülse 32 ein nicht dargestellter umlaufender Ringbund vorgesehen ist, an welcher der Magnetring 14 anliegt.

## Patentansprüche

1. Vorrichtung (10, 30) zum Bestimmen eines auf eine Welle (11) ausgeübten Drehmoments, wobei die Welle (11) einen ersten Wellenabschnitt (12) aufweist, auf dem ein drehfest angeordneter multipolarer Magnetring (14) vorgesehen ist und einen, mit dem ersten Wellenabschnitt (12) drehelastisch verbundenen zweiten Wellenabschnitt (18) aufweist, auf dem ein drehfest angeordneter Magnetfeldsensor (20) vorgesehen ist, wobei der bei einem auf die Welle (11) wirkenden Drehmoment auftretende Verdrehwinkel des Magnetrings (14) mit dem Magnetfeldsensor (20) erfassbar und aus dem Verdrehwinkel das auf die Welle (11) wirkende Drehmoment bestimmbar ist, **dadurch gekennzeichnet,**
**dass** der Magnetring (14) mit einem wenigstens abschnittsweise zwischen dem ersten Wellenabschnitt (12) und dem Magnetring (14) vorgesehenen Klebstoff (22) am ersten Wellenabschnitt (12) angeordnet ist oder
**dass** der Magnetring (14) mit einem wenigstens abschnittsweise zwischen einer auf dem ersten Wellenabschnitt (12) drehfest angeordneten Hülse (32) und dem Magnetring (14) vorgesehenen Klebstoff (22) an der Hülse (32) angeordnet ist, wobei der erste Wellenabschnitt (12), beziehungsweise die Hülse (32), auf der dem Magnetring (14) zugewandten Seite wenigstens abschnittsweise eine erhabene oder vertiefte Struktur (24, 34, 36) zur formschlüssigen Verzahnung des Klebstoffs (22) mit dem ersten Wellenabschnitt (12), beziehungsweise der Hülse (32), in axialer und/oder umlaufender Richtung aufweist,
und/oder der Magnetring (14) auf seiner dem ersten Wellenabschnitt (12), beziehungsweise der Hülse (32), zugewandten Innenseite wenigstens abschnittsweise eine Struktur (40) zur formschlüssigen Verzahnung des Klebstoffs (22) mit dem Magnetring (14) in axialer und/oder umlaufender Richtung aufweist.

2. Vorrichtung (10, 30) nach Anspruch 1, **dadurch gekennzeichnet, dass** die wellenseitige, beziehungsweise hülsenseitige, und/oder magnetringseitige Struktur rändelartig ausgebildet ist, eine oder mehrere wenigstens abschnittsweise umlaufende Nuten und/oder Stege aufweist, Bohrungen, Sacklöcher und/oder eine oder mehrere Schlüsselflächen aufweist.

3. Vorrichtung (10, 30) nach Anspruch 1, **dadurch gekennzeichnet, dass** die magnetringseitige Struktur zur Mittellängsachse (38) des Magnetrings gewandte Zentrierabschnitte (40) zum koaxialen Anordnen des Magnetrings (14) auf dem ersten Wellenabschnitt (12), beziehungsweise der Hülse (32), aufweist.

4. Vorrichtung (10, 30) nach Anspruch 3, **dadurch gekennzeichnet, dass** der Durchmesser (d) eines an den freien Enden der Zentrierabschnitte (40) anliegenden, gedachten Zylinders gleich oder nur geringfügig größer ist als der Außendurchmesser des Wellenabschnitts (12), beziehungsweise der Hülse (32).

5. vorrichtung (10, 30) nach Anspruch 3 oder 4, **dadurch gekennzeichnet, dass** die Zentrierabschnitte (40) im Wesentlichen parallel zur Mittellängsachse (38) des Magnetrings (14) verlaufen.

6. Vorrichtung (10, 30) nach Anspruch 3 oder 4, **dadurch gekennzeichnet dass** die Zentrierabschnitte (40) schräg zur Mittellängsachse (38) des Magnetrings (14) verlaufen.

7. Vorrichtung (10, 30) nach wenigstens einem der vorhergehenden Ansprüche, **dadurch gekennzeichnet, dass** die Welle (11) in axialer Richtung neben dem Magnetring (14) eine in Schulter aufweist, an der der Magnetring (14) wenigstens abschnittsweise anliegt.

8. Vorrichtung (10, 30) nach Anspruch 7, **dadurch gekennzeichnet, dass** die Schulter als umlaufender Ringbund ausgebildet ist.

## Claims

1. Apparatus (10, 30) for determining a torque which is exerted on a shaft (11), wherein the shaft (11) has a first shaft section (12), on which a multipole magnet ring (14) which is arranged in a rotationally fixed manner is provided, and has a second shaft section (18) which is connected to the first shaft section (12) in a rotationally elastic manner and on which a magnetic field sensor (20) which is arranged in a rotationally fixed manner is provided, wherein the torsion angle of the magnet ring (14), which torsion angle occurs when a torque acts on the shaft (11), can be detected by the magnetic field sensor (20), and the torque which acts on the shaft (11) can be determined from the torsion angle, **characterized in that** the magnet ring (14) is arranged on the first shaft section (12) with an adhesive (22) which is provided between the first shaft section (12) and the magnet ring (14) at least in sections, or **in that** the magnet ring (14) is arranged on a sleeve (32) with an adhesive (22) which is provided between the sleeve (32) which is arranged in a rotationally fixed manner on the first shaft section (12) and the magnet ring (14) at least in sections, wherein the first shaft section (12), or the sleeve (32), has, on that side which faces the magnet ring (14), at least in sections, a raised or recessed structure (24, 34, 36) for interlocking toothed engagement of the adhesive (22) with the first shaft section (12), or the sleeve (32), in the axial and/or circumferential direction, and/or the magnet ring (14) has, on its inner face which faces the first shaft section (12), or the sleeve (32), at least in sections, a structure (40) for interlocking toothed engagement of the adhesive (22) with the magnet ring (14) in the axial and/or circumferential direction.

2. Apparatus (10, 30) according to Claim 1, **characterized in that** the shaft-side, or sleeve-side, and/or magnet ring-side structure is in the form of a knurl, has one or more grooves and/or webs which run around the circumference at least in sections, and has bores, blind holes and/or one or more key surfaces.

3. Apparatus (10, 30) according to Claim 1, **characterized in that** the magnet ring-side structure has centring sections (40), which face the centre longitudinal axis (38) of the magnet ring, for coaxially arranging the magnet ring (14) on the first shaft section (12), or on the sleeve (32).

4. Apparatus (10, 30) according to Claim 3, **characterized in that** the diameter (d) of an imaginary cylinder which rests against the free ends of the centring sections (40) is identical to or only slightly larger than the outside diameter of the shaft section (12), or of the sleeve (32).

5. Apparatus (10, 30) according to Claim 3 or 4, **characterized in that** the centring sections (40) run substantially parallel to the centre longitudinal axis (38) of the magnet ring (14).

6. Apparatus (10, 30) according to Claim 3 or 4, **characterized in that** the centring sections (40) run obliquely to the centre longitudinal axis (38) of the magnet ring (14).

7. Apparatus (10, 30) according to at least one of the preceding claims, **characterized in that** the shaft (11) has a shoulder in the axial direction next to the magnet ring (14), the magnet ring (14) resting against the said shoulder at least in sections.

8. Apparatus (10, 30) according to Claim 7, **characterized in that** the shoulder is in the form of a circumferential annular collar.

## Revendications

1. Dispositif (10, 30) destiné à déterminer le couple de rotation exercé sur un arbre (11), l'arbre (11) présentant
une première partie d'âme (12) sur laquelle un anneau magnétique multipolaire (14) est disposé à rotation solidaire et
une deuxième partie d'arbre (18), reliée élastiquement en rotation à la première partie d'arbre (12) et sur laquelle une sonde (20) de champ magnétique est disposée à rotation solidaire,
l'angle de torsion de l'anneau magnétique (14) qui survient lorsqu'un couple de rotation agit sur l'arbre (11) pouvant être détecté par la sonde (20) de champ magnétique et le couple de rotation agissant sur l'arbre (11) pouvant être déterminé à partir de l'angle de torsion,
**caractérisé en ce que**
l'anneau magnétique (14) est disposé sur la première partie d'arbre (12) avec un adhésif (22) prévu au moins dans certaines parties situées entre la première partie d'arbre (12) et l'anneau magnétique (14) ou
**en ce que** l'anneau magnétique (14) est disposé sur une douille (32) à l'aide d'un adhésif (22) prévu au moins sur certaines parties situées entre lia douille (32) disposée à rotation solidaire sur la première partie d'arbre (12) et l'anneau magnétique (14), la première partie d'arbre (12) ou la douille (32) présentant sur au moins certaines parties du côté tourné vers l'anneau magnétique (14) une structure (24, 34, 36) en saillies ou en creux qui permet un engrenage en correspondance géométrique entre l'adhésif (22) et la première partie d'arbre (12) ou la douille (32) dans la direction axiale et/ou la direction périphérique, et/ou
**en ce que** l'anneau magnétique (14) présente sur au moins certaines parties de son côté intérieur tourné vers la première partie d'arbre (12) ou vers la douille (32) une structure (40) qui permet un engrenage en correspondance géométrique de l'adhésif (22) sur l'anneau magnétique (14) dans la direction axiale et/ou la direction périphérique.

2. Dispositif (10, 30) selon la revendication 1, **caractérisé en ce que** la structure prévue du côté de l'arbre, du côté de la douille et/ou du côté de l'anneau magnétique a une configuration moletée, présente une ou plusieurs rainures et/ou nervures qui s'étendent au moins sur certaines parties de la périphérie, des alésages, des trous aveugles et/ou une ou plusieurs surfaces de serrure.

3. Dispositif (10, 30) selon la revendication 1, **caractérisé en ce que** du côté de l'anneau magnétique, la structure présente des parties de centrage (40) alignées sur l'axe longitudinal central (38) de l'anneau magnétique pour disposer coaxialement l'anneau magnétique (14) sur la première partie d'arbre (12) ou sur la douille (32).

4. Dispositif (10, 30) selon la revendication 3, **caractérisé en ce que** le diamètre (d) d'un premier cylindre imaginaire appliqué sur les extrémités libres des parties de centrage (40) est identique ou légèrement plus grand que le diamètre extérieur de la partie d'arbre (12) ou de la douille (32).

5. Dispositif (10, 30) selon les revendications 3 ou 4, **caractérisé en ce que** les parties de centrage (40) s'étendent essentiellement en parallèle à l'axe longitudinal central (38) de l'anneau magnétique (14).

6. Dispositif (10, 30) selon les revendications 3 ou 4, **caractérisé en ce que** les parties de centrage (40) s'étendent transversalement par rapport à l'axe longitudinal central (38) de l'anneau magnétique (14).

7. Dispositif (10, 30) selon au moins l'une des revendications précédentes, **caractérisé en ce que** l'arbre (11) présente dans la direction axiale un épaulement situé à côté de l'anneau magnétique (14) et sur lequel au moins certaines parties de l'anneau magnétique (14) reposent.

8. Dispositif (10, 30) selon la revendication 7, **caractérisé en ce que** l'épaulement est configuré comme collet annulaire périphérique.
